# EUROPEAN PATENT APPLICATION

(11) **EP 3 109 129 A1**
(43) Date of publication of application: **28.12.2016**
(21) Application number: 15173949.7
(22) Date of filing: 25.06.2015
(51) Int. Cl.: B62B 3/02, B62B 3/10

(54) **FOLDABLE SHOPPING CART**

(71) Applicant: Abecassis, Yehuda, 7776202 Ashdod (IL)
(72) Inventor: ABECASSIS, Yehuda, 7776202 Ashdod (IL); BERMAN, Ronen, 4585800 Matan (IL)
(74) Representative: Balder IP Law, S.L.

(57) **Abstract**

A foldable cart (100) comprising: a foldable framework comprising a lower frame (116), an upper frame (112) and joint connectors (120) connected to said upper and lower frames via joints connecting said upper and lower frame, a plurality of foldable wheel units (140), re-enforcing elements (122) horizontally connecting between the jointed connectors and re-enforcing straps (130) connecting between the opposite edges of the lower framework and the upper framework. The jointed connectors have two parts connected by the joint, and are arranged to fold from a convex state in the unfolded state of the cart inwards through a convex state to the folded state. The at least one of the joint of said foldable framework comprises a stopper mechanism (45, 71, 72) being configured to limit the angle between the two parts of the joint connector in an unfolded angular positioning such as to create coaxial geometrical lock of the frame in association with re-enforcing straps.

## Description

### BACKGROUND

### 1. TECHNICAL FIELD

The present invention relates to the field of carts, and more particularly, to a foldable shopping cart.

### 2. DISCUSSION OF RELATED ART

Shopping cart are in common use, yet they either have a small volume (when foldable) or must be rented and used only on the shopping grounds.
Ep application No. 11719071 of the applicant discloses a foldable cart comprising a foldable framework with foldable wheel units and flexible containers attachable thereto. The cart may be folded to fit a vehicle's luggage room, and the containers may be used to store products when attached to the framework, and carry them on when the framework is folded. The framework and the wheels may be folded inwardly such as to minimize the volume and the dimensions of the folded cart.

### BRIEF SUMMARY

Embodiments of the present invention provide A foldable cart comprising:
a foldable framework comprising a lower frame, an upper frame and joint connectors connected to said upper and lower frames via joints connecting said upper and lower frame such that the upper frame overlaps the lower frame in a folded state of the foldable cart;
at least one flexible container removably attached to the foldable framework in an unfolded state thereof; and
a plurality of foldable wheel units comprising wheels and connected to the lower frame opposite to the connectors, the wheel units arranged to be folded in the folded state creating flat structure, such as to minimize the volume of the cart in the folded state,
re-enforcing elements horizontally connecting between the jointed connectors wherein the jointed connectors have two parts connected by the joint, and are arranged to fold from a convex state in the unfolded state of the cart inwards through a convex state to the folded state, in which the two parts are parallel to each other;
re-enforcing straps connecting between the opposite edges of the lower framework and the upper framework
wherein at least one of the joints of said foldable framework comprises a stopper mechanism, said stopper mechanism being configured to limit the angle between the two parts of the joint connector in an unfolded angular positioning such as to create coaxial geometrical lock of the frame in association with re-enforcing straps, which prevent these two parts of the joint connector from folding one in respect to the other once the angle between the connector is beyond predefined value.

According to some embodiments of the present invention the foldable cart comprises a plurality of flexible container in different sizes removable attached to the foldable framework in an unfolded state thereof.

According to some embodiments of the present invention the foldable cart further comprising a handle attached to the upper frame.
According to some embodiments of the present invention the foldable cart the at last one of the wheel units comprises a direction stopper arranged to fixate an orientation of the corresponding wheel.

According to some embodiments of the present invention each said stopper mechanism comprises two stopper members, wherein each stopper member include a protrusion, wherein the protrusions are deigned and positioned, such that when the rotation of the two stopper members is restricted once the two protrusions are in contact, wherein this design limit the rotation of the joint members rotation to the predefined angle value for creating the geometrical coaxial lock.

According to some embodiments of the present invention the stopper mechanism comprise: locking mechanism, said locking mechanism being configured to lock the connectors to one another in an unfolded angular positioning such as to prevent these connectors from folding one in respect to the other in the locked position of said locking mechanism.

According to some embodiments of the present invention said locking mechanism comprises two interlocking members: a first locking member and a second locking member coaxially located in respect to one another about an axis "x:, each having at least one insert adapted to receive therein at least one edge of at least one of said connectors, wherein the first locking member has at least one recces and the second locking member has at least one protruding portion adapted to interlock with the recces of the first member for preventing said connectors joint by said locking mechanism from folding and maintaining thereof in an unfolded position, whereas upon applying a rotation force for rotating said interlocking members about said axis "x" thereof, exceeding a predefined threshold the interlocking members unlock for folding said framework.

According to some embodiments of the present invention said interlocking mechanism further comprises at least one closure connectable to one of said interlocking members for connecting to an edge of a connector.

According to some embodiments of the present invention said locking mechanism further comprises a spring located over an edge of said connector and at least partially inserted into said insert of one of said interlocking members, such that the spring applies a force over the other interlocking member for improving locking thereto. According to some embodiments of the present invention the foldable cart further comprising a bracket designed with slit for holding the re-enforcing strap, the bracket can rotate freely for enabling the re-enforcing strap to stretch fully and straight to support the geometrical locking.

These, additional, and/or other aspects and/or advantages of the present invention are: set forth in the detailed description which follows; possibly inferable from the detailed description; and/or learnable by practice of the present invention.

### BRIEF DESCRIPTION OF THE DRAWINGS

The present invention will be more readily understood from the detailed description of embodiments thereof made in conjunction with the accompanying drawings of which:
Fig. 1 is an illustration of a foldable cart in an unfolded state according to some embodiments of the invention;
Fig. 2 is an illustration of a foldable cart in an unfolded state with flexible containers, according to some embodiments of the invention;
Fig. 3 is an illustration of the foldable cart in a folded state according to some embodiments of the invention;
Fig. 4 is an illustration exploded view of the foldable cart according to some embodiments of the invention;
Fig. 5A-C are an illustrations of the joint members according to some embodiments of the invention;
Fig. 6A-C are an illustrations of the joint members according to some embodiments of the invention;
Fig. 7A is an illustrations of the upper joint connected with frames connectors according to some embodiments of the invention;
Fig. 7B is an illustrations of the middle joint connected with frames connectors according to some embodiments of the invention;
Fig. 8A is an illustrations of the middle joint inner structure including a spring according to some embodiments of the invention;
Fig. 8B is an illustrations of the middle joint inner structure according to some embodiments of the invention;
Fig. 9 is an illustrations of the middle joint exploded view including all inner parts according to some embodiments of the invention;
Fig. 10 is an illustrations of the wheel connector according to some embodiments of the invention;

### DETAILED DESCRIPTION

Before explaining at least one embodiment of the invention in detail, it is to be understood that the invention is not limited in its application to the details of construction and the arrangement of the components set forth in the following description or illustrated in the drawings. The invention is applicable to other embodiments or of being practiced or carried out in various ways. Also, it is to be understood that the phraseology and terminology employed herein is for the purpose of description and should not be regarded as limiting.

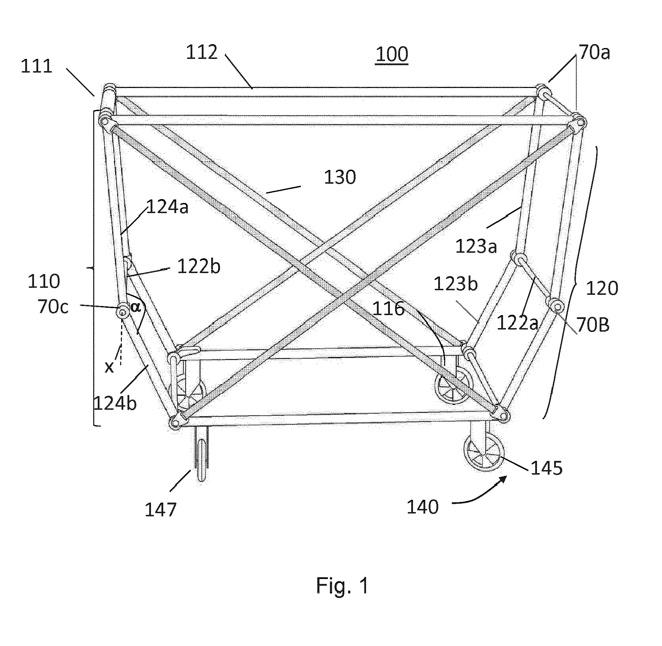

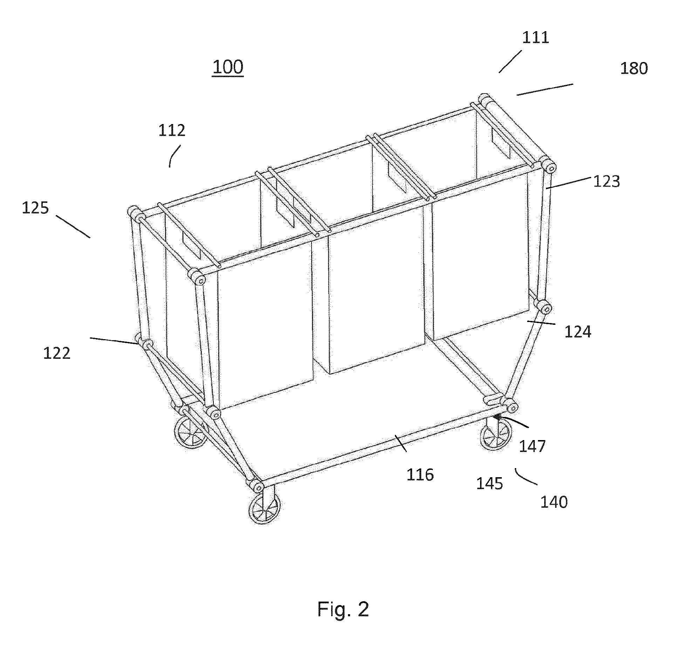

Fig. 1 is a schematic an illustration of a foldable cart **100** in an unfolded state according to some embodiments of the invention. Fig. 2 is an illustration of the foldable cart **100** in an unfolded state with flexible containers **180**, according to some embodiments of the invention.

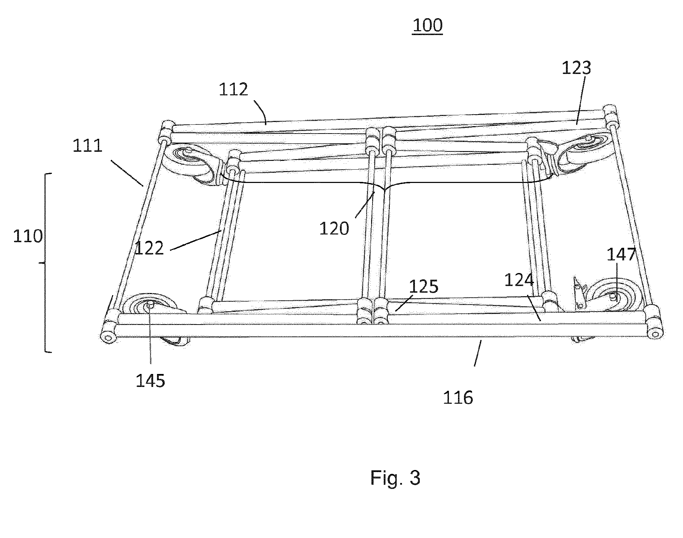

Fig. 3 is an illustration of foldable cart **100** in a folded state according to some embodiments of the invention. In the unfolded state cart **100** functions as a shopping cart and in the folded state cart **100** has flat structure to fits into a small storage space such as vehicle's luggage room.

Foldable cart **100** comprises a foldable framework **110** comprising an upper frame **112** connected via a plurality of jointed connectors **120** to a lower frame **116.** Foldable cart **100** may further comprise a handle **111** attached to upper frame **112**, handle **111** is arranged to allow pulling or pushing cart **100**.

Each jointed connector **120** has a joint **70(a,b)** arranged to allow folding jointing connector **120** in such a way that upper frame **112** is substantially congruent to, or at least overlaps lower frame **116** in the folded state of cart **100**. In cases upper frame **112** and lower frame **116** have different forms, in the folded state they are arranged to have a maximal overlap.

Foldable framework may further comprise re-enforcing elements **122** connected horizontally between the joined connectors **120**. Jointed connectors **120** may have two parts **123**, **124** connected by joint **70**. Connectors **120** may be arranged to fold from a convex state in the unfolded state of cart **100** inwards through a convex state to the folded state, in which two parts **123, 124** are parallel to each other.

According to some embodiment of the present invention the foldable framework may further comprise re-enforcing straps 130 connected to joint 125.

Foldable cart **100** comprises at least one flexible container 180 removably attached to foldable framework **110** in the unfolded state thereof. Flexible container **180** of various sizes may be connected to framework **110**, and may be sold as a kit comprising containers **180** of different sizes, meant for use in different situations, like buying large or small products. After detaching containers **180** from framework **110**, they may be used for carrying products, e.g., as a shopping bag for groceries. Flexible container **180** may be made, e.g., from plastic or cloth, may be washable, printed, etc.

Foldable cart **100** comprises a plurality of wheel units **140** comprising wheels **145** and connected to lower frame **116** on an opposite side in respect to connectors **120**, and arranged to allow pushing and dragging cart **100** easily. Wheel units **140** may also be foldable in the folded state such as to minimize the volume of the folded cart **100**.

At last one of wheel units **140** may comprise a direction stopper **147** arranged to fixate the orientation of the corresponding wheel **145.** Direction stopper **147** may be released to allow free movement of corresponding wheel **145.**

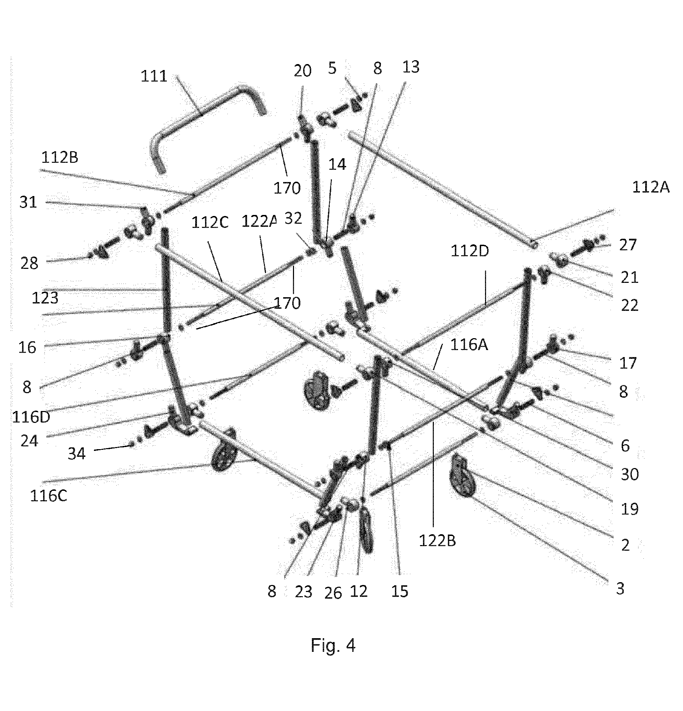

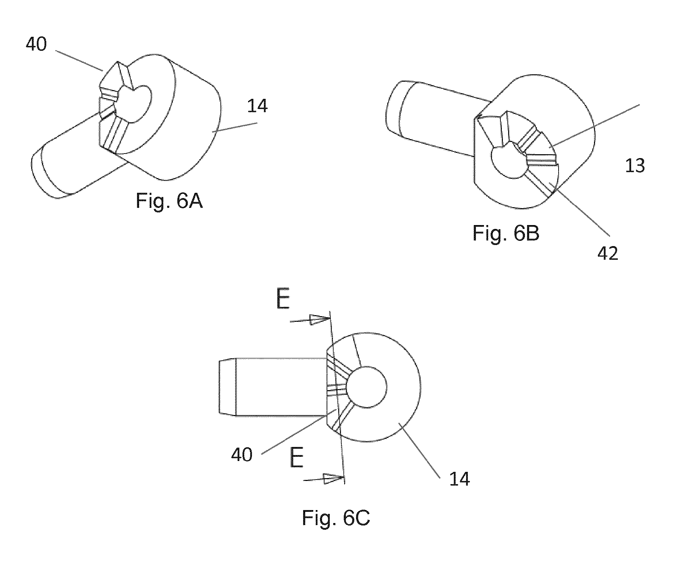

Fig. 4 is an exploded view of the foldable cart parts according to some embodiments of the invention. The foldable cart is comprised of a foldable framework **110** comprising an upper frame **parts 112**A,B,C,D connected via a plurality of jointed connectors locking parts **123** and 124 to a lower frame **parts 116** A,B,C,D. The jointed connectors are connected by middle joints 70b which are comprised of two stopper members 71 and 72 and closure 34 which constructs a stopper mechanism. The middle joints further connect joint connectors to horizontal re-enforcing elements **122**A and 122 B. According to some embodiments the middle joints included a locking mechanism described in Fig. 6. Optionally the locking mechanism of one joint may include a spring. The upper joint 70a which connect which connect the upper connectors to the upper frame are comprised of two joint members 71A and 72B and bracket 27.

The joint connectors and the enforcing elements are cylindrical tube, having cylindrical edges 170 which have smaller diameter than, the main part of the cylindrical tube. These cylindrical edge 170 are inserted within the inner cavity (74,75, see Fig, 5a, 5b) of the joint/locking members 71 and 71 or 13 and 14 . Optionally in at the middle joint 125A, is included a spring 32 mounted on the cylindrical edge 170.

The lower joint which connect the lower connectors to the lower frame 116 are comprised of two joint members 26 and 23 and closure 27.

To the upper frame is further connected a one edge a handle 11.

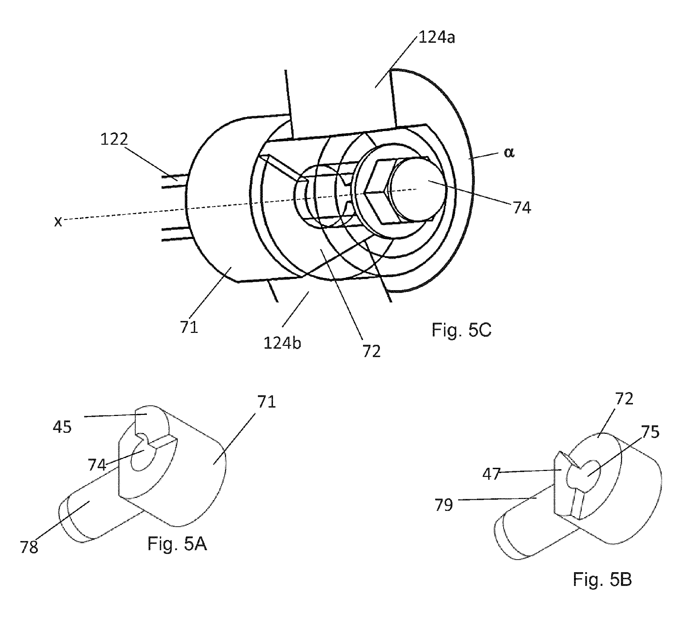

Fig. 5A-C are an illustrations of the upper or middle joint members according to some embodiments of the invention. This joint member 71 has a protrusion stopper 45 which correspond with protrusion 47 of joint member 72 creating a stopper mechanism, enabling limited rotation of the joint members at predefined angle in relation to the length of the re-enforcing straps 130 and angle α between connector 124a and 124b(see Fig. 1), such as to create geometrical coaxial lock in association with re-enforcing straps. Once the joint members rotate beyond predefined angle. Once the geometrical lock is created the re-enforcing straps create tension to retract the opposite edges of the cart upper and lower frames, the retraction of the cart is prevented by the stopper protrusions of the joint members, which prevent the connectors to rotate beyond specified angle. The joint member 72 has a pipe edge 79 for connecting the edge of connector 124a.

According to some embodiments of the present invention foldable framework comprises a stopper mechanism, said stopper mechanism being configured to limit the angle between the two parts of the joint connector in an unfolded angular positioning such as to create coaxial geometrical lock of the frame in association with re-enforcing straps, which prevent these two parts of the joint connector from folding one in respect to the other once the angle between the connector is beyond predefined value.

Each said stopper mechanism may comprises two stopper members, each stopper member include a protrusion, wherein the protrusions are deigned and positioned, such that when the rotation of the two stopper members is restricted once the two protrusions are in contact, wherein this design limit the rotation of the joint members rotation to the predefined angle value for creating the geometrical coaxial lock.

Fig. 6A-C are an illustrations of the middle joint members according to some embodiments of the invention. According to this embodiment the joint ember construct a locking mechanism. The middle joint member 14 ( Fig 6A) has at least one protrusion 40 which correspond with at least recces 47 at joint member 13 (Fig. 6B), enabling to restrict the rotation of the joint members to prevent the connectors from folding, where no force is applied on connectors.

According to the embodiment shown in drawings there are three protrusions and three corresponding recesses to enable improved locking of the joint.

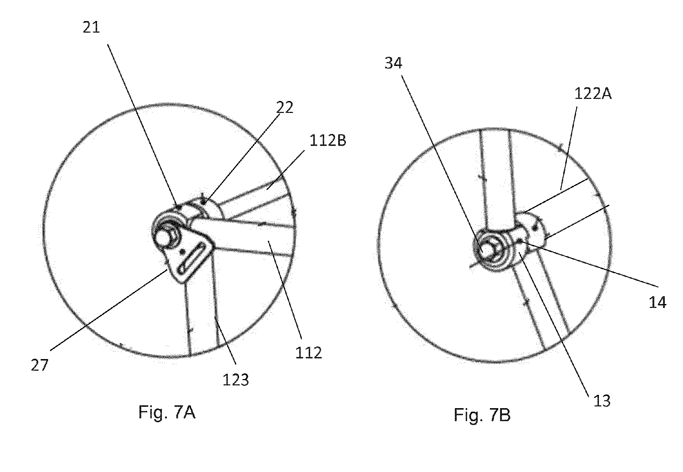

Fig. 7A is an illustrations of the upper joint connected with frames connectors according to some embodiments of the invention. The upper joint is comprised of two members 21, 22 and bracket 27, connecting connectors 112C,112B of the upper frame 112, and the connector 123. The bracket 27 is designed with slit for holding the re-enforcing strap, the bracket can rotate freely for enabling the re-enforcing strap to stretch fully and straight to support the geometrical locking.

Fig. 7B is an illustrations of the middle joint connected with frames connectors according to some embodiments of the invention. The middle joint is comprised of two members 21, 22 and closure 34, connecting connectors 123,124 and re-enforcing element 122A.

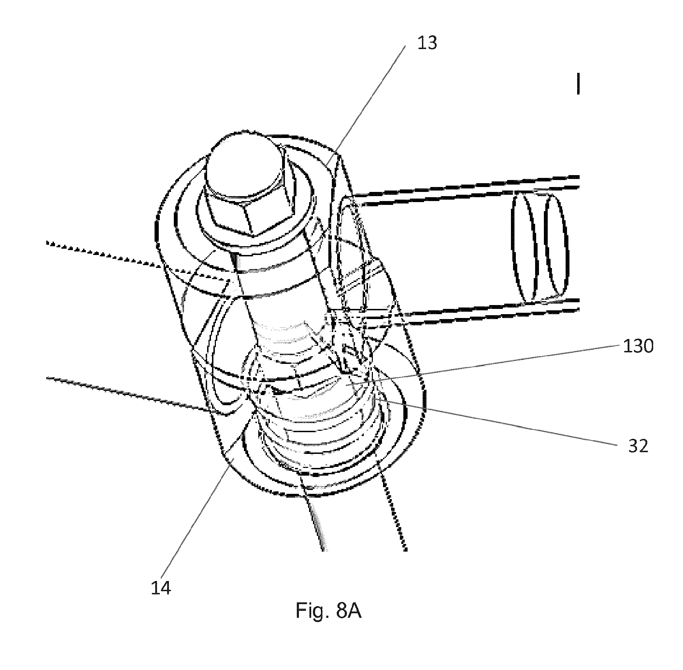

Fig. 8A is an illustrations of the middle joint inner structure including a spring according to some embodiments of the invention. This figure illustrates the locking mechanism inside the joint including the two locking members 13, 14 and the spring 32 located over the connector edge 170 within the locking member 14. Such unique structure of the joint locking mechanisms and the spring provide safe locking of the connectors preventing undesirable folding of the cart. The spring applies a force over the interlocking member 14 for improving locking operation.

According to some embodiments of the present invention the locking mechanism further comprises a spring located over an edge of said connector and at least partially inserted into said insert of one of said interlocking members, such that the spring applies a force over the other interlocking member for improving locking thereto

As described above the locking mechanism comprises two interlocking members: a first locking member and a second locking member coaxially located in respect to one another about an axis "x:, each having at least one insert adapted to receive therein at least one edge of at least one of said connectors. The first locking member has at least one recces and the second locking member has at least one protruding portion adapted to interlock with the recces of the first member for preventing said connectors joint by said locking mechanism from folding and maintaining thereof in an unfolded position. The structure of protruding portions and the recces is designed to prevent folding , only upon applying a rotation force on the connectors for rotating said interlocking members about said axis "x" thereof, exceeding a predefined threshold the interlocking members unlock for folding said framework

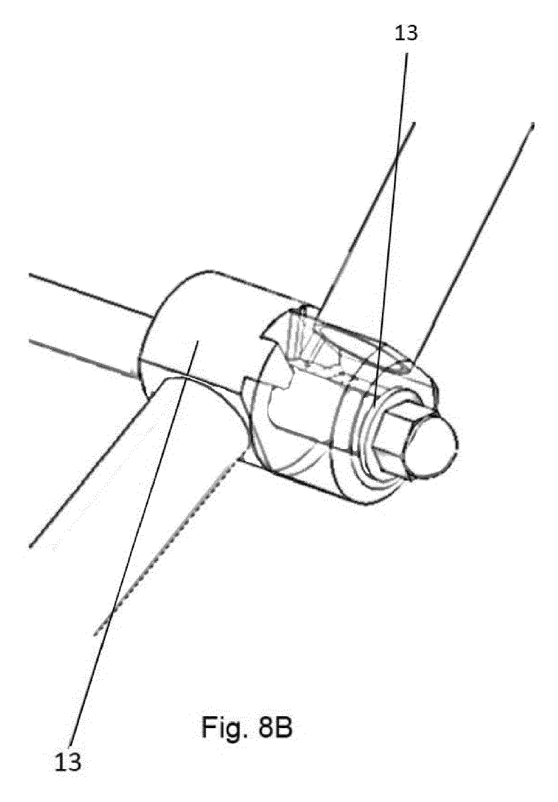

Fig. 8B is an illustrations of the middle joint inner structure according to some embodiments of the invention

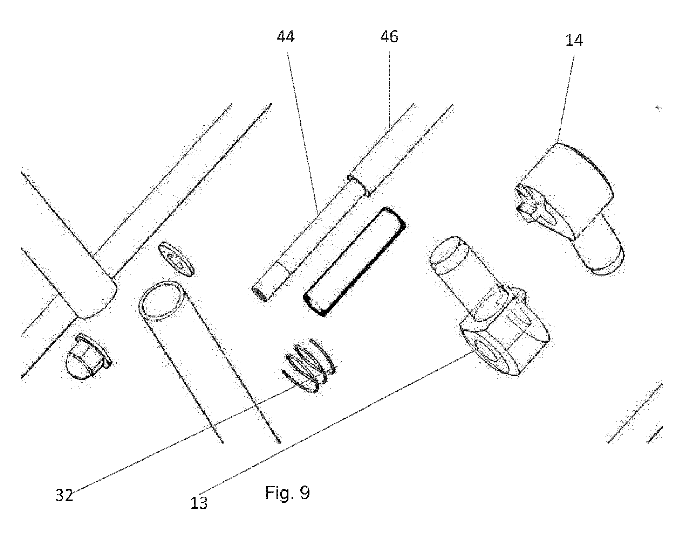

Fig. 9 is an illustrations of the middle joint exploded view including all inner parts according to some embodiments of the invention.

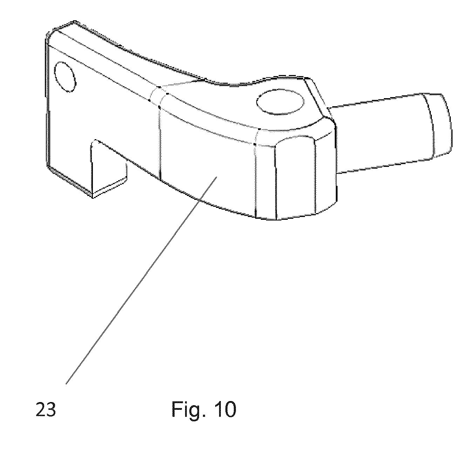

Fig. 10 is an illustrations of the wheel connector according to some embodiments of the invention.

In the above description, an embodiment is an example or implementation of the inventions. The various appearances of "one embodiment", "an embodiment" or "some embodiments" do not necessarily all refer to the same embodiments.

Although various features of the invention may be described in the context of a single embodiment, the features may also be provided separately or in any suitable combination. Conversely, although the invention may be described herein in the context of separate embodiments for clarity, the invention may also be implemented in a single embodiment.

Reference in the specification to "some embodiments", "an embodiment", "one embodiment" or "other embodiments" means that a particular feature, structure, or characteristic described in connection with the embodiments is included in at least some embodiments, but not necessarily all embodiments, of the inventions.

It is to be understood that the phraseology and terminology employed herein is not to be construed as limiting and are for descriptive purpose only.

The principles and uses of the teachings of the present invention may be better understood with reference to the accompanying description, figures and examples.

It is to be understood that the details set forth herein do not construe a limitation to an application of the invention.

Furthermore, it is to be understood that the invention can be carried out or practiced in various ways and that the invention can be implemented in embodiments other than the ones outlined in the description above.

It is to be understood that the terms "including", "comprising", "consisting" and grammatical variants thereof do not preclude the addition of one or more components, features, steps, or integers or groups thereof and that the terms are to be construed as specifying components, features, steps or integers.

If the specification or claims refer to "an additional" element, that does not preclude there being more than one of the additional element.

It is to be understood that where the claims or specification refer to "a" or "an" element, such reference is not to be construed that there is only one of that element.

It is to be understood that where the specification states that a component, feature, structure, or characteristic "may", "might", "can" or "could" be included, that particular component, feature, structure, or characteristic is not required to be included.

Where applicable, although state diagrams, flow diagrams or both may be used to describe embodiments, the invention is not limited to those diagrams or to the corresponding descriptions. For example, flow need not move through each illustrated box or state, or in exactly the same order as illustrated and described.

Methods of the present invention may be implemented by performing or completing manually, automatically, or a combination thereof, selected steps or tasks.

The term "method" may refer to manners, means, techniques and procedures for accomplishing a given task including, but not limited to, those manners, means, techniques and procedures either known to, or readily developed from known manners, means, techniques and procedures by practitioners of the art to which the invention belongs.

The descriptions, examples, methods and materials presented in the claims and the specification are not to be construed as limiting but rather as illustrative only.

Meanings of technical and scientific terms used herein are to be commonly understood as by one of ordinary skill in the art to which the invention belongs, unless otherwise defined.

The present invention may be implemented in the testing or practice with methods and materials equivalent or similar to those described herein.

Any publications, including patents, patent applications and articles, referenced or mentioned in this specification are herein incorporated in their entirety into the specification, to the same extent as if each individual publication was specifically and individually indicated to be incorporated herein. In addition, citation or identification of any reference in the description of some embodiments of the invention shall not be construed as an admission that such reference is available as prior art to the present invention.

While the invention has been described with respect to a limited number of embodiments, these should not be construed as limitations on the scope of the invention, but rather as exemplifications of some of the preferred embodiments. Other possible variations, modifications, and applications are also within the scope of the invention. Accordingly, the scope of the invention should not be limited by what has thus far been described, but by the appended claims and their legal equivalents.

## Claims

1. A foldable cart comprising:
a foldable framework comprising a lower frame, an upper frame and joint connectors connected to said upper and lower frames via joints connecting said upper and lower frame such that the upper frame overlaps the lower frame in a folded state of the foldable cart;
a plurality of foldable wheel units comprising wheels and connected to the lower frame opposite to the connectors, the wheel units arranged to be folded in the folded state creating flat structure, such as to minimize the volume of the cart in the folded state,
re-enforcing elements horizontally connecting between the jointed connectors wherein the jointed connectors have two parts connected by the joint, and are arranged to fold from a convex state in the unfolded state of the cart inwards through a convex state to the folded state, in which the two parts are parallel to each other; and
re-enforcing straps connecting between the opposite edges of the lower framework and the upper framework
wherein at least one of the joints of said foldable framework comprises a stopper mechanism, said stopper mechanism being configured to limit the angle between the two parts of the joint connector in an unfolded angular positioning such as to create coaxial geometrical lock of the frame in association with re-enforcing straps, which prevent these two parts of the joint connector from folding one in respect to the other once the angle between the connector is beyond predefined value.

2. The foldable cart of claim 1, comprises a plurality of flexible container in different sizes removable attached to the foldable framework in an unfolded state thereof.

3. The foldable cart of claim 1, wherein the at least one flexible container is arranged to be useable as a shopping bag when detached from the foldable cart.

4. The foldable cart of claim 1, wherein the at least one flexible container is made of at least one of: plastic; and cloth.

5. The foldable cart of claim 1, further comprising a handle attached to the upper frame.

6. The foldable cart of claim 1, wherein at last one of the wheel units comprises a direction stopper arranged to fixate an orientation of the corresponding wheel.

7. The foldable cart of claim 1, wherein each said stopper mechanism comprises two stopper members, wherein each stopper member include a protrusion, wherein the protrusions are deigned and positioned, such that when the rotation of the two stopper members is restricted once the two protrusions are in contact, wherein this design limit the rotation of the joint members rotation to the predefined angle value for creating the geometrical coaxial lock.

8. The foldable cart of claim 1 or 7, wherein the stopper mechanism comprise: locking mechanism, said locking mechanism being configured to lock the connectors to one another in an unfolded angular positioning such as to prevent these connectors from folding one in respect to the other in the locked position of said locking mechanism.

9. The foldable cart of claim 8, wherein each said locking mechanism comprises two interlocking members: a first locking member and a second locking member coaxially located in respect to one another about an axis "x:, each having at least one insert adapted to receive therein at least one edge of at least one of said connectors, wherein the first locking member has at least one recces and the second locking member has at least one protruding portion adapted to interlock with the recces of the first member for preventing said connectors joint by said locking mechanism from folding and maintaining thereof in an unfolded position, whereas upon applying a rotation force for rotating said interlocking members about said axis "x" thereof, exceeding a predefined threshold the interlocking members unlock for folding said framework.

10. The foldable cart of claim 9, wherein said interlocking mechanism further comprises at least one closure connectable to one of said interlocking members for connecting to an edge of a connector.

11. The foldable cart any one of claims 9 to 10, wherein said locking mechanism further comprises a spring located over an edge of said connector and at least partially inserted into said insert of one of said interlocking members, such that the spring applies a force over the other interlocking member for improving locking thereto.

12. The foldable cart of claim 1 further comprising a bracket designed with slit for holding the re-enforcing strap, the bracket can rotate freely for enabling the re-enforcing strap to stretch fully and straight to support the geometrical locking.
